# EUROPEAN PATENT APPLICATION

(11) **EP 4 838 089 A1**
(43) Date of publication of application: **11.11.2026**
(21) Application number: 25174932.1
(22) Date of filing: 08.05.2025
(51) Int. Cl.: F03D 7/04, F03D 17/00

(54) **METHOD OF OPERATING A WIND PARK**

(71) Applicant: Siemens Gamesa Renewable Energy A/S, 7330 Brande (DK)
(72) Inventor: Freiberg, Uffe Sjølund, 7120 Vejle Øst (DK); Esbensen, Thomas, 7400 Herning (DK); Beaudet, Laurent, 76300 Sotteville-les-Rouen (FR); Gonzalez, Alejandro Gomez, 8000 Aarhus (DK)
(74) Representative: SGRE-Association

(57) **Abstract**

The invention describes a method of operating a wind park (2WP) comprising steps of identifying a wind turbine pair (2A, 2B) comprising a first wind turbine (2A) and a second wind turbine (2B); determining a spatial relationship (α) between the second wind turbine (2B) and the first wind turbine (2A); obtaining a first wind direction reading (2A_{wd}) indicative of the wind direction (Dₜᵣᵤₑ) at the first wind turbine (2A); determining a pair-adjusted wind direction (2A2B_{wd}) for the second wind turbine (2B) on the basis of the first wind direction reading (2A_{wd}) and the spatial relationship (α); and deducing the existence of a wake-induced wind direction error at the second wind turbine (2B) on the basis of the pair-adjusted wind direction (2A2B_{wd}). The invention further describes a control arrangement (1) for carrying out the claimed method, and a wind park (2WP) operated using the claimed method.

## Description

### Background

A wind park or wind farm can comprise many wind turbines, generally arranged in a grid formation, for example the wind turbines can be arranged in rows, using the prevailing wind direction at that site as a guide to minimize the effect of wake on any wind turbine behind the wind turbines of the "front row", i.e. the row of wind turbines arranged to face into the prevailing wind. The slower and more turbulent wind flow behind a wake-generating wind turbine can impact the performance of a downstream wind turbine. Any such "downstream wind turbine", partially or completely in the wake of an upstream wind turbine, experiences a reduction in power output and increased mechanical stress. These consequences are referred to as "wake loss", and can be significant in a wind farm.

While the average direction of airflow in the wake generally corresponds to the free-stream wind direction (i.e the direction of the wind arriving at the upstream wind turbine), "wake-swirl" can result in wake-induced wind direction errors and yaw misalignment. Wake-swirl comprises various kinds of rotational fluid disturbances caused by the turning rotor of the upstream turbine, for example rotating fluid disturbances caused by the three rotor blades of the upstream wind turbine as they disrupt the incoming airflow, and turbulent rotating fluid disturbances caused by tip vortices. The direction of such a rotating fluid disturbance is determined by direction of rotation of the rotor of the wake-inducing wind turbine, i.e. a rotating fluid disturbance usually moves in the clockwise direction (looking onto the wake-inducing wind turbine) and its shape can be described as "right-handed helical". Each rotor blade generates a helically rotating disturbance in the wake, whereby the airflow disturbance at any point along a rotor blade depends on the thickness of the rotor blade and the rotational velocity of the rotor blade at that point. Each rotor blade tip causes vortex-induced turbulence at the outer bounds of the wake, giving rise to a helically rotating trail of turbulence. The "wake-swirl" comprising these helically rotating disturbances breaks down with increasing distance from the wake-inducing wind turbine.

A wind turbine in the wake of an upstream wind turbine can be affected to some extent by the wake, depending on whether the downstream wind turbine is partially or completely in the wake. When a rotating fluid disturbance of the wake passes over the wind sensor of the downstream wind turbine, the wind direction as seen by the sensor is the local airflow direction in that fluid disturbance, which can - more often than not - be significantly different from the free-stream wind direction. A wind sensor such as an ultrasonic wind sensor is generally installed on the nacelle, behind the rotor plane, and measures parameters including wind direction. The wind direction readings are needed by the wind turbine controller, which uses them to yaw the aerodynamic rotor into the wind. However, the wind direction readings reported by the wind sensor of a wake-affected wind turbine may differ significantly from a wind direction as measured for example by the wind sensor of an upstream or wake-generating wind turbine. The controller of such a wake-affected wind turbine wind turbine interprets the erroneous reading as representative of the actual wind field direction, and updates the yaw reference accordingly. As a result, that wind turbine will - more often than not - be misaligned. A wind turbine operating with yaw misalignment captures less power and generally experiences higher mechanical loads, which are detrimental for the power production and lifetime of the installation.

Erroneous readings delivered by the wind sensor of a downstream wind turbine not only worsen the operation of that wind turbine, but can also worsen the operation of other wind turbines of the wind park if the park controller relies on wind direction readings reported by the wind turbines.

It is therefore an object of the invention to provide a way of overcoming the problems outlined above.

This object is achieved by the claimed method of operating a wind park, by the claimed control arrangement and by the claimed wind park.

### Description

In the following, it is assumed that a controller of the wind park is able to identify whether a wind turbine is downstream of another wind turbine. Any two such wind turbines constitute a virtual wind turbine pair, without any other wind turbines in between. The first wind turbine of a pair is referred to in the following as the "upstream wind turbine" and may be assumed to be yawed such that it faces into the wind, while the second wind turbine of that pair is the "downstream wind turbine" and may be in the wake of the upstream wind turbine. A wind park controller can identify any number of such pairs, depending on the layout of the wind park and the number of wind turbines in the wind park. As the wind direction changes, the pairings can change.

As indicated above, the extent to which a downstream wind turbine is affected by the wake of its upstream wind turbine can depend on various factors including the wind park layout, the free-stream wind direction, the free-stream wind speed and wind shear, etc.

According to the invention, the method of operating a wind park comprises steps of: identifying a wind turbine pair comprising an upstream wind turbine and a downstream wind turbine; determining a spatial relationship between the downstream wind turbine and the upstream wind turbine; obtaining a first wind direction value indicative of the wind direction at the upstream wind turbine; determining a pair-adjusted wind direction for the downstream wind turbine on the basis of the first wind direction value and the spatial relationship; and deducing the existence of a wake-induced wind direction error at the downstream wind turbine on the basis of the pair-adjusted wind direction.

The expression "pair-adjusted wind direction" shall be understood as a parameter determined from the wind direction as reported for the upstream wind turbine, and the spatial relationship between the two wind turbines.

The existence of a wake-induced wind direction error at the downstream wind turbine can be determined without actually using the measured wind direction at that wind turbine. An advantage of the inventive method is that, using only a small number of reliable inputs, it is possible to identify a situation in which a downstream wind turbine is likely to be affected by the wake of an upstream wind turbine. The pair-adjusted wind direction for any pair of wind turbines in a wind park can be established to a favourably high degree of accuracy, so that the subsequent control stages are based on reliable data. Furthermore, in wind park with a regular layout, the behaviour of the downstream wind turbines of multiple wind turbine pairs can be expected to be similar, so that control of the wind park can be simplified.

The invention also describes a control arrangement for a wind park, configured to carry out the claimed method. The inventive control arrangement is adapted to obtain a spatial relationship between a downstream wind turbine and an upstream wind turbine; to obtain a wind direction value from the upstream wind turbine; and to determine the pair-adjusted wind direction for the downstream wind turbine on the basis of the wind direction value and the spatial relationship. The inventive control arrangement is further adapted to deduce a wake-induced wind direction error for the downstream wind turbine on the basis of the pair-adjusted wind direction.

The inventive control arrangement can be realised entirely as part of a park controller. Alternatively or in addition, the control arrangement can be distributed, comprising units or modules realised locally in the wind turbines.

According to the invention, the wind park comprises a plurality of wind turbines and is operated using the claimed method.

The object of the invention is also achieved by a computer program product with a computer program that is directly loadable into the memory of a controller and which comprises program units to perform the steps of the inventive method when the program is executed by the control unit.

Particularly advantageous embodiments and features of the invention are given by the dependent claims, as revealed in the following description. Features of different claim categories may be combined as appropriate to give further embodiments not described herein.

There are various possible ways of obtaining the first wind direction value. For example, this can be a consensus wind direction obtained using wind direction readings from multiple wind turbines (e.g. the upstream wind turbine and its immediate neighbours; from one or more wind turbines of the wind park that are known to be located in positions favourable to measuring the freestream wind direction). Equally, the first wind direction value can be a wind direction reading from a meteorological mast or weather station. In another possible approach, the first wind direction value can be measured using a wind sensor arrangement of the upstream wind turbine. The expressions "wind direction at the upstream wind turbine", "first wind direction" and "freestream wind direction" are regarded as synonyms and may be used interchangeably herein.

In the following, without restricting the invention in any way, it may be assumed that each wind turbine of the wind park is equipped with a wind sensor that can measure and report wind speed readings and wind direction readings. For example, each wind turbine of the wind park can be equipped with one or more wind sensors installed on the roof of the nacelle, and can report wind speed and wind direction at regular intervals to the controller of that wind turbine. Wind measurements made at some or all wind turbines of the wind park may be sent also to the wind park controller. The upstream wind turbine of a pair can be assumed to measure the free-stream or true wind speed, and in the following the terms "free-stream wind speed", "true wind speed" and "upstream wind speed" may be regarded as synonyms.

As mentioned above, the wind park preferably comprises a means of identifying one or more wind turbine pairs - each comprising an upstream wind turbine and a downstream wind turbine - on the basis of the wind park layout and the free-stream wind direction. For example, if a wind park controller has knowledge of the wind park layout and the free-stream wind direction, it can identify any wind turbine that is "behind" an upstream wind turbine and potentially in its wake.

The spatial relationship between the upstream and downstream wind turbines of a pair can be established in any suitable manner. It can be assumed that the actual position of each wind turbine in the wind park is known. With this information, the position of the downstream wind turbine of a pair can be expressed relative to any upstream wind turbine. For example, the spatial relationship between the upstream and downstream wind turbines of a pair can be the angular separation between those two wind turbines, measured from a fixed reference such as true north. In a particularly preferred embodiment of the invention, the fixed reference used to measure the first wind direction is also used to express the angular separation between the two wind turbines of a pair.

When using the angular separation to express the spatial relationship between the upstream and downstream wind turbines of a pair, the expression "pair-adjusted wind direction" as used herein shall be understood as the difference (in degrees) between the wind direction as reported for the upstream wind turbine (relative to a fixed reference such as true north), and the angular separation between the two wind turbines.

The existence of a wake-induced wind direction error can be deduced in a number of ways. For example, the existence of a wake-induced wind direction error for a downstream wind turbine can be deduced from wind direction readings obtained from wind sensors located at different positions on that wind turbine (for example on each side of the nacelle). During operation of the wind turbine, the angular difference between the two sensor outputs can be computed at regular intervals. When the angular difference exceeds a predetermined threshold, this can be an indication that the downstream turbine is affected by wake-swirl.

In a preferred embodiment of the invention, the existence of a wake-induced wind direction error can be deduced from a pattern in a series of pair-adjusted wind direction readings for a downstream wind turbine. Such a pattern might be identified from readings collected from wind direction sensors located at different locations in the wind park, determining an angle between the readings and comparing this angle to a predefined threshold. When the observed wind direction difference exceeds the threshold, the downstream turbine may be assumed to be affected by wake-swirl.

The robustness of such an approach can be improved by using further types of data relevant to the observed wind turbines. In a particularly preferred embodiment of the invention, the existence of a wake-induced wind direction error is deduced on the basis of the pair-adjusted wind direction and a wind speed reading of the first wind turbine.

When a wake-induced wind direction error is considered likely, the controller (e.g. the wind turbine controller of the downstream wind turbine) can respond in a number of ways. For example, the wind turbine controller of the downstream wind turbine may perform yaw control using the wind direction readings of the upstream wind turbine. In a particularly preferred embodiment of the invention, instead of using the upstream wind turbine's readings, the magnitude of the wake-induced wind direction error is determined, and the wind direction reading of the downstream wind turbine is corrected accordingly. To this end, the inventive method preferably comprises a preparatory phase in which a relationship is established between wind direction error, the pair-adjusted wind direction, and a further parameter of the upstream wind turbine. This further parameter shall be understood to express the operating point of the upstream wind turbine, and can be a value of wind speed at the upstream wind turbine, or any quantity indicative of, or correlating to, that wind speed. For example, the further parameter can be a value of torque, thrust, rotor blade moment, etc. In the following, for the sake of simplicity, it may be assumed that the further parameter is a value of wind speed at the upstream wind turbine.

There are various possible ways of obtaining a value of wind speed at the upstream wind turbine. For example, this can be a consensus wind speed obtained using wind speed readings from multiple wind turbines (e.g. the upstream wind turbine and its immediate neighbours; from one or more wind turbines of the wind park that are known to be located in positions favourable to measuring the freestream wind speed). Equally, the wind speed value can be a wind speed reading from a meteorological mast or weather station. In another possible approach, the first wind speed value can be measured using a wind sensor arrangement of the upstream wind turbine. The expressions "wind speed at the upstream wind turbine", "first wind speed" and "freestream wind speed" are regarded as synonyms and may be used interchangeably herein.

The relationship is established between wind direction error, the pair-adjusted wind direction, and freestream wind speed can be a mathematical relationship. In a particularly preferred embodiment of the invention, the relationship is established in an iterative process, wherein each iteration comprises steps of obtaining a wind speed value and a wind direction value for the first wind turbine; obtaining a wind direction value for the second wind turbine; computing the pair-adjusted wind direction; and computing the wind direction error from the wind direction values. In each iteration, the newly-computed value of wind direction error is used to adjust a mean wind direction error for that combination of wind speed and pair-adjusted wind direction.

Each combination of wind speed and pair-adjusted wind direction can be regarded as an X,Y coordinate pair in Cartesian space, and the wind direction error computed for that coordinate pair can be regarded as a point on the Z-axis. After performing many iterations, the mean wind direction error for each X,Y coordinate pair can "settle" to a favourably stable value. The iterative process is performed for as long as it takes to establish a sufficiently robust relationship between wind values of a pair and the wind direction error of the downstream wind turbine. The process may be deemed "complete" if the mean wind direction error for a specific combination of wind speed and pair-adjusted wind direction remains sufficiently constant over a certain length of time. For example, if the mean wind direction error for a wind speed of 7 m/s and a pair-adjusted wind direction of +2° is observed to be 3° with a variance of less than 10% over a week, the mean wind direction error for that combination of wind speed and pair-adjusted wind direction can be assumed to be 3° in the future.

In a preferred embodiment of the invention, values of mean wind direction error are computed for bins of wind speed and pair-adjusted wind direction, for example wind speed bins of 5 m/s intervals and pair-adjusted wind direction bins of 2° intervals.

Preferably, this relationship is established in a preparatory phase, for example over a period of at least several months. The iterative process is only executed when the upstream wind turbine of a pair is actually operational, i.e. the upstream wind turbine is generating a wake. This information can be provide by the wind park controller, which knows the status of each wind turbine, i.e. whether it is operating normally, shut down, idling or curtailed. If the upstream wind turbine of a pair is shut down, idling or curtailed, it can be assumed that the downstream wind turbine is unaffected by its wake and the iterative process for that pair is preferably paused or interrupted until the upstream wind turbine is operational once more.

Once established, the relationship between wind direction error, wind speed and pair-adjusted wind direction for a wind turbine pair can be stored in a memory, for example in a memory of a controller of the downstream wind turbine of that pair. In a preferred embodiment of the invention, the information is stored in the form of an array, for example a look-up table (LUT). The controller of each wind turbine of a wind park may therefore comprise several such LUTs, one for each possible upstream wind turbine with which it may constitute a pair, depending on the free-stream wind direction.

As indicated above, each combination of pair-adjusted wind direction and wind speed can be regarded as a coordinate pair, with pair-adjusted wind direction along the X-axis and wind speed along the Y-axis. The corresponding mean wind direction error can be regarded as a value along the Z-axis. Each X,Y,Z value set can be stored for a suitably large space, for example for wind speeds up to 15 m/s and values of pair-adjusted wind direction in a range between -40° and +40°.

The inventors have observed that not every combination of pair-adjusted wind direction and free-stream wind speed is associated with a significant value of wind direction error, i.e. the wind direction as measured by the downstream wind turbine will not always require correction. Instead, the inventors have realised that, for a specific wind turbine pair of a wind park, certain combinations of free-stream wind speed and pair-adjusted wind direction may be more likely to result in wind direction error for the downstream wind turbine. Therefore, in a particularly preferred embodiment of the invention, the memory stores only wind speed and pair-adjusted wind direction combinations for which the wind direction error exceeds a predetermined threshold, for example only for a wind direction error larger than 2°. The memory effectively only stores a subset of the total number of wind speed and pair-adjusted wind direction combinations. Since this subset of coordinate pairs effectively defines the operational region in which the wind turbine's wind sensor is adversely affected by the swirling airflow in the wake of the upstream turbine, it is referred to herein as the "swirl region". This reduces the computational effort of the controller of the downstream wind turbine, since a correction of wind direction will only be required relatively seldom. Furthermore, if several wind turbine pairs are observed to yield similar data during the preparatory phase, it can be sufficient to identify the existence of a wake-induced wind direction error for one of those downstream wind turbine, and a corresponding correction can be applied to all those downstream wind turbines collectively.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 3 show wind turbines of a wind park to illustrate possible wake situations;
Figures 4 and 5 illustrate wind data collected for a wind turbine pair of such a wind park;
Figure 6 is a simplified block diagram of a control arrangement of the invention;
Figure 7 is a simplified tabular representation used by the control arrangement of Figure 6;
Figure 8 and Figure 9 show steps of an exemplary embodiment of the invention;
Figure 10 illustrates a problem known from the prior art.

In the diagrams, like numbers refer to like objects throughout. Objects in the diagrams are not necessarily drawn to scale.

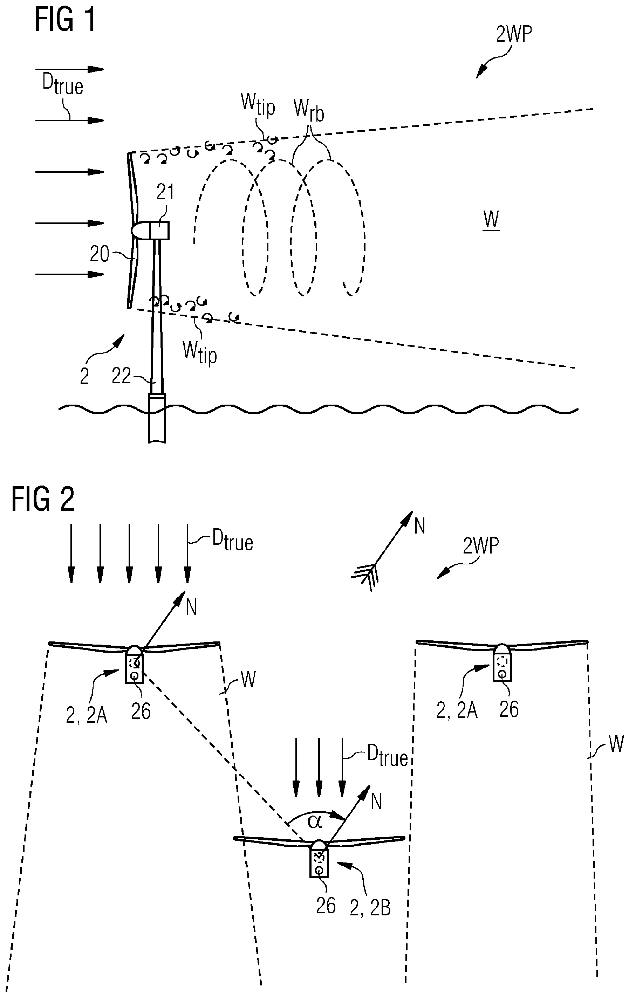

Figures 1 - 3 show wind turbines 2A, 2B of a wind farm 2WP, and indicate the effect of an upstream wind turbine 2A on a downstream wind turbine 2B. The diagrams show how the wind park layout and the free-stream wind direction Dₜᵣᵤₑ can cause some wind turbines 2B to be in the wake of an upstream of other wind turbines 2A. During operation, the rotor blades 20 of the upstream wind turbine 2A turn as indicated in Figure 1 (i.e. in the clockwise direction when viewed from the front), and each rotor blade 20 disturbs the incoming airflow over the entire length of the rotor blade. The nature and extent of the airflow disturbance W_{rb} created at any point along a rotor blade 20 depends on the thickness of the rotor blade and on the rotational velocity of the rotor blade at that point. A helically rotating fluid disturbance W_{rb} caused by the rotor blade's length and a helically rotating trail of vortices Wₜᵢₚ develops for each rotor blade 20 as shown in Figure 1. The effect of only one rotor blade is shown for the sake of clarity, but it shall be understood that three such helical fluid disturbances W_{rb}, Wₜᵢₚ are transported as "wake-swirl" in the downwind direction, and gradually dissipate with increasing distance from the wind turbine 2A. The wake W of the upstream wind turbine 2A, in addition to wake-swirl W_{rb}, Wₜᵢₚ, also comprises disturbances caused by the stationary tower 22 and nacelle 21.

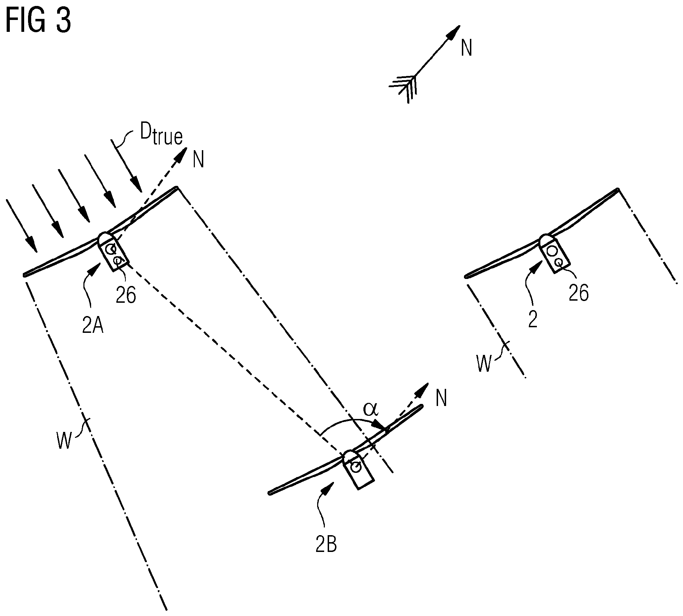

The extent to which a downstream wind turbine 2B is affected by the wake W of an upstream wind turbine 2A depends on various factors. A downstream wind turbine 2B can be partially or completely in the wake W of an upstream wind turbine 2A, and this in turn depends on the wind direction Dₜᵣᵤₑ and the wind farm topography. Generally, a wind farm 2WP is planned so that its wind turbines 2 are optimally placed for the prevailing wind direction. Figure 2 and Figure 3 indicate the angular separation α between two wind turbines 2A, 2B of a pair.

Figure 2 shows an exemplary scenario in which the wind direction Dₜᵣᵤₑ is similar to the prevailing wind direction, so that a downstream wind turbine 2B of the wind farm 2WP is only partially inside the wake W of an upstream wind turbine 2A. In Figure 3, the wind direction Dₜᵣᵤₑ differs significantly from the prevailing wind direction, and the same downstream wind turbine 2B may be affected significantly by the wake W of the same upstream wind turbine 2A.

The airflow W arriving at the wind sensor 26 of the downstream wind turbine 2B comprises various types of flow disturbances W_{rb}, Wₜᵢₚ as described above. As a result, the measured wind direction 2B_{wd} as "seen" by the downstream wind turbine 2B may often be incorrect, resulting in a yaw misalignment.

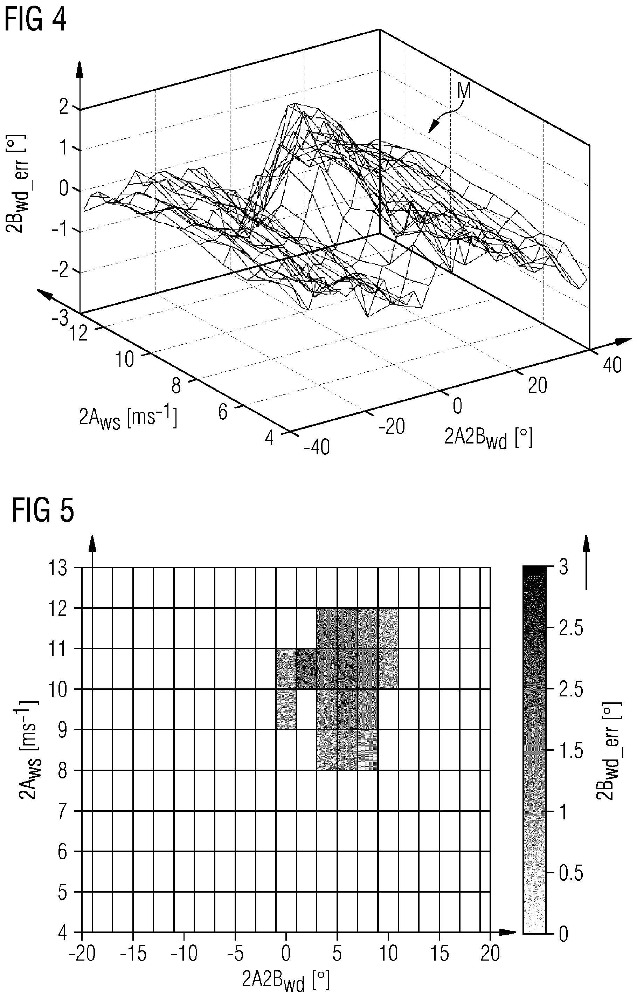

Figures 4 and 5 explain the underlying idea of the invention and the steps leading to a relationship that can be applied to correct erroneous wind direction values during operation of a downstream wind turbine 2B of a wind farm. These diagrams illustrate a relationship between freestream wind speed, pair-adjusted wind direction, and wind direction error. Instead of wind speed, an alternative parameter or quantity could be used, for example any parameter or quantity that is indicative of, or correlates to, the wind speed. For example, the Y-axis of the relationship could indicate a value of power, torque, thrust, rotor blade moment etc., for the upstream wind turbine, i.e. any quantity that reliably expresses the operating point of the upstream wind turbine.

Figure 4 is a plot M of wind data as collected by a wind turbine pair - i.e. an upstream wind turbine 2A and a downstream wind turbine 2B of a wind farm 2WP as illustrated in Figure 2 and Figure 3. The upstream wind turbine 2A is assumed to report correct wind data, i.e. free-stream wind direction wind speed readings, and is also assumed to be correctly aligned into the wind. The Y-axis shows wind speed 2A_{ws} (in metres per second) as measured for example by a sensor 26 of the upstream wind turbine 2A. The downstream wind turbine 2B, which may be situated in the wake W of the upstream wind turbine 2A, can report a wind direction 2B_{wd} that is significantly different from the free-stream wind direction 2A_{wd} as reported for the upstream wind turbine 2A. The X-axis shows the pair-adjusted wind direction 2A2B_{wd} (in degrees), i.e. the difference between the wind direction 2A_{wd} as measured by the upstream wind turbine 2A relative to a fixed reference such as true north, and the angular separation α between the two wind turbines 2A, 2B. The third variable along the Z-axis is the mean wind direction error 2B_{wd_err} (in degrees), i.e. the mean difference between the wind direction 2A_{wd} as measured by the upstream wind turbine 2A and the wind direction 2B_{wd} as measured by the upstream wind turbine 2B.

Erroneous wind direction readings are a result of the downstream wind turbine 2B being partially or completely in the wake of the upstream wind turbine 2A. As a result of an incorrect wind direction reading 2B_{wd}, the downstream wind turbine 2B yaws to align with its perceived (but incorrect) wind direction, leading to yaw misalignment and the attendant problems as described above. The inventors have realized that the wake-induced wind direction error or wake error is not random, as might be expected from the turbulent nature of a wind turbine wake W. Instead, the inventors have realized that, with only a small number of reliable parameters, it is possible to accurately identify a situation in which the measured wind direction of a downstream wind turbine is likely to be incorrect. By monitoring the upstream wind speed and the pair-adjusted wind direction for a wind turbine pair over a prolonged duration, and by computing the wind direction error for each combination of free-stream wind speed and pair-adjusted wind direction, it is possible to use the collected data to predict the wind direction error for any combination of wind direction and pair-adjusted wind direction during subsequent operation.

For example, data can be collected over several months for a specific wind turbine pair 2A, 2B until the "landscape" of the 3D relationship M becomes sufficiently stable. During that time, there will be various phases in which the downstream wind turbine 2B is completely inside the wake of the upstream wind turbine 2A, partially inside the wake of the upstream wind turbine 2A, and not inside the wake of the upstream wind turbine 2A. Thereafter, it is sufficient to obtain wind readings 2A_{ws}, 2A_{wd} from the upstream wind turbine 2A and to determine the pair-adjusted wind direction 2A2B_{wd} between the two wind turbines 2A, 2B in order to obtain a favourably accurate estimate of the wind direction error 2B_{wd_err} of the downstream wind turbine 2B.

For example, assuming an angular separation α of 235° between wind turbines 2A, 2B, when the upstream wind turbine 2A of Figure 3 reports a wind speed 2A_{ws} of 9 m/s and a wind direction 2A_{wd} of 240° (relative to true north), the pair-adjusted wind direction 2A2B_{wd} is 5°, the wind turbine controller of the downstream wind turbine 2B assumes that the wind direction error is 3° and corrects the downstream wind turbine's wind direction reading 2B_{wd} by this amount. A yaw controller of the downstream wind turbine 2B will then generate yaw references on the basis of the more accurate, corrected wind direction.

The wind direction corrections are preferably restricted to a subset of wind speed and pair-adjusted wind direction values. Figure 5 shows a subset M_{swirl} of relevant values derived from a complete set M of data as illustrated in Figure 4, and applies to the same wind turbine pair 2A, 2B. Since the wind direction error 2B_{wd_err} of the wind turbine 2B is mostly noncritical (for example at any wind speed in combination with a pair-adjusted wind direction greater than +8°), it is sufficient to identify a subset M_{swirl} of "critical" combinations of X (pair-adjusted wind direction 2A2B_{wd}) and Y (free stream wind speed 2A_{ws}) coordinates for the graph of Figure 4, and to apply the corresponding wind direction correction 2B_{wd_err} only when a coordinate pair falls within that subset M_{swirl}. Since this subset M_{swirl} effectively defines the operational region in which the wind turbine's wind sensor 26 is adversely affected by wake-swirl W_{rb}, Wₜᵢₚ in the wake W of the upstream turbine 2A, it is referred to herein as the "swirl region" M_{swirl}. The subset M_{swirl} of critical wind speed and pair-adjusted wind direction combinations, along with the appropriate Z-axis values for mean error 2B_{wd_err}, can be saved in a memory 11.

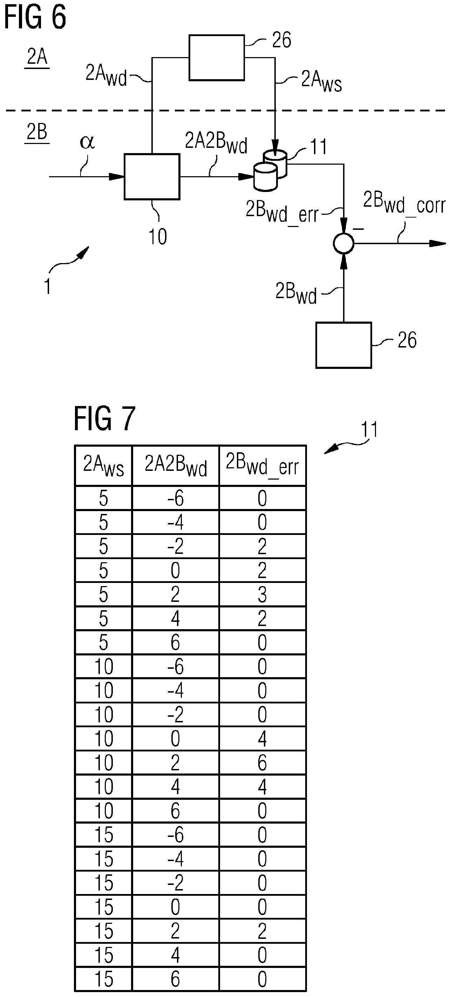

Figure 6 is a block diagram to illustrate the inventive approach. The diagram shows wind sensors 26 of the upstream wind turbine 2A and downstream wind turbine 2B of a wind turbine pair. A control arrangement 1 (which may be realised as part of a wind turbine controller and/or a wind park controller) comprises a module 10 to compute the pair-adjusted wind direction 2A2B_{wd} from the wind direction 2A_{wd} reported by the upstream wind turbine 2A and the angular separation α between the two wind turbines 2A, 2B. The free-stream wind speed 2A_{ws} is provided by the wind sensor 26 of the upstream wind turbine 2A. The controller 1 also comprises a suitable memory 11, for example in the form of a LUT 11, relating each critical combination of pair-adjusted wind direction 2A2B_{wd} and free-stream wind speed 2A_{ws} to a wind direction correction 2B_{wd_err}. During operation of the downstream wind turbine 2B, the occurrence of any such critical combination results in correction of the locally measured wind direction 2B_{wd} at module 11 as indicated. A yaw controller (not shown) of the downstream wind turbine 2B can then update its yaw reference using the corrected wind direction value 2B_{wd_corr}, and the downstream wind turbine 2B is more accurately aligned into the incoming airflow.

During operation of the downstream wind turbine 2B, the control arrangement 1 can simply check to see if the present combination of wind speed 2A_{ws} and pair-adjusted wind direction 2A2B_{wd} appears in the LUT 11. If this is the case, the controller 1 assumes that the downstream wind turbine 2B is in the "swirl region" M_{swirl} and simply corrects for the corresponding error 2B_{wd_err} in order to align the wind turbine 2B more accurately into the incoming airflow. An exemplary LUT 11 is shown in Figure 7. When the free-stream wind speed 2A_{ws} is 10 m/s and the pair-adjusted wind direction 2A2B_{wd} is in the range -6° to -2°, the controller 1 can assume that a correction of the measured wind direction 2B_{wd} is not necessary, since the corresponding wind direction correction 2B_{wd_err} is 0°. However, when the pair-adjusted wind direction 2A2B_{wd} is in the range 0° to +6° at the same free-stream wind speed, the controller 1 sees that a correction of the measured wind direction 2B_{wd} is necessary. For example, the controller 1 will apply a correction 2B_{wd_err} of 6° when the pair-adjusted wind direction 2A2B_{wd} is +2°.

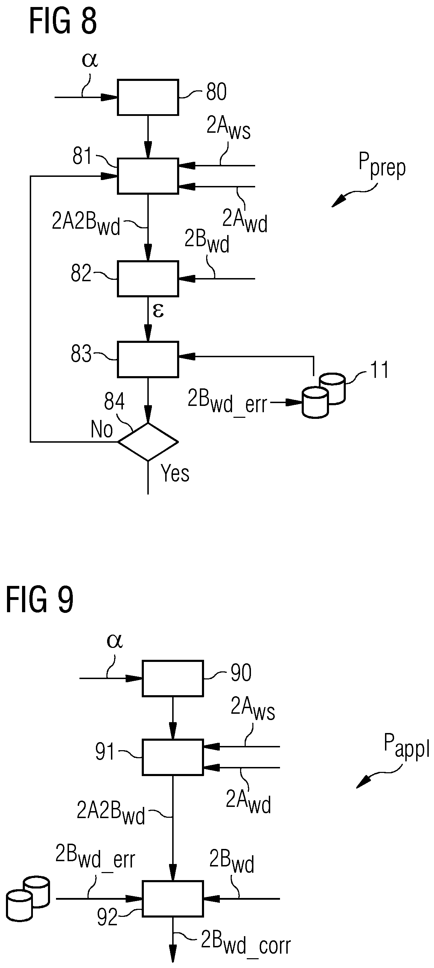

Figure 8 shows an exemplary flowchart to illustrate a preparatory stage Pₚᵣₑₚ in the inventive approach to identify the "swirl region" for the downstream wind turbine of a wind turbine pair 2A, 2B. The angular separation α between the wind turbines is known to the wind park controller and is obtained in step 80. In each iteration, a wind speed reading 2A_{ws} and a wind direction reading 2A_{wd} are obtained from the upstream wind turbine 2A, and the pair-adjusted wind direction 2A2B_{wd} is computed in step 81. A wind direction reading 2B_{wd} is obtained from the downstream wind turbine 2B in step 82, and the difference or error ε between the wind direction readings 2A_{wd}, 2B_{wd} is computed. This error ε is used to refine the mean wind direction error 2B_{wd_err} from the previous iteration in step 83. After reaching a satisfactorily stable value of 2B_{wd_err}, the preparatory stage Pₚᵣₑₚ is deemed complete. The iterative process can be performed over a prolonged period of time, collecting wind data at suitable intervals (for example every 10 minutes over a period of six months), until a convergence criterion is fulfilled, i.e. until a favourably stable mean error value 2B_{wd_err} is obtained for each combination of wind speed and pair-adjusted wind direction. At this point, all critical combinations of wind speed 2A_{ws} and pair-adjusted wind direction 2A2B_{wd} have been identified and related to a value of mean wind direction error 2B_{wd_err}.

The critical subset or "swirl region" M_{swirl} has now been identified for the downstream wind turbine 2B of that wind turbine pair and the information is presented in a suitable form, for example as a LUT 11 as shown in Figure 7. Depending on its position in the wind park, a downstream wind turbine can be a member of several pairs, and the free-stream wind direction determines which upstream wind turbine completes the pair at any point in time. For such a wind turbine, a separate LUT 11 for each possible pair is developed in the preparatory stage Pₚᵣₑₚ described above, and the set of LUTs 11 can be stored in a memory of the wind turbine controller of that wind turbine.

In a subsequent application phase Pₐₚₚₗ as shown in Figure 9, it is sufficient to obtain the angular separation α between the wind turbines 2A, 2B of a pair in step 90, and to obtain free-stream wind data, in this case wind speed readings 2A_{ws} and wind direction readings 2A_{wd} from the upstream wind turbine 2A in step 91. Using the free-stream wind direction reading 2A_{wd}, the pair-adjusted wind direction 2A2B_{wd} is computed. Knowing the pair-adjusted wind direction 2A2B_{wd} and the free-stream wind speed reading 2A_{ws}, a corresponding wind direction error 2B_{wd_err} can be retrieved from the relevant LUT 11 in step 92, and the measured wind direction 2B_{wd} can be corrected so that a more accurate wind direction 2B_{wd_corr} is given to the yaw controller of the downstream wind turbine 2B. If that combination of wind speed 2A_{ws} and pair-adjusted wind direction 2A2B_{wd} does not appear in the critical subset or "swirl region" M_{swirl} stored in the LUT 11, no correction is necessary.

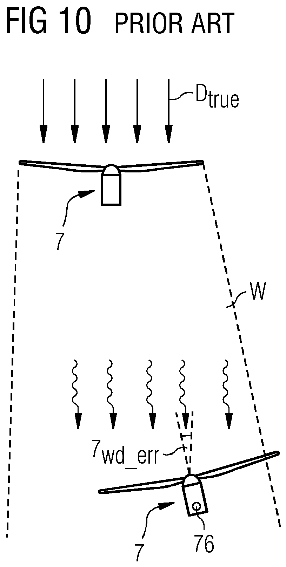

Figure 10 shows a scenario which may occur when a prior art method is used to control wind turbines 7 of a wind farm. Here, each wind turbine 7 is equipped with a wind sensor 76 that reports wind direction readings, and each wind turbine 7 generates a yaw reference on the basis of the local wind direction reading. In the diagram, fluid rotation and turbulence in the wake W of the upstream wind turbine results in erratic wind direction readings being reported by the wind sensor 76 of the downstream wind turbine. As a result, the yaw reference for the downstream wind turbine can often be incorrect, i.e. the aerodynamic rotor of the downstream wind turbine can be frequently misaligned relative to the incoming airflow (the diagram shows a "snapshot", and the wake-induced wind direction error 7_{wd_err} can vary widely, depending on various factors such as the free-stream wind speed and wind shear, the distance between the wind turbines 7, the wind park layout, etc.

Although the present invention has been disclosed in the form of preferred embodiments and variations thereon, it will be understood that numerous additional modifications and variations could be made thereto without departing from the scope of the invention. For example, although an embodiment as explained above detects wake-swirl on the basis of a relationship between three variables, it is conceivable that wake-swirl might be detected using a relationship between four or more variables.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module. Any pronoun denoting a specific gender shall be understood to apply equally to any gender identity.

## Claims

1. A method of operating a wind park (2WP) comprising steps of:
- identifying a wind turbine pair (2A, 2B) comprising a first wind turbine (2A) and a second wind turbine (2B);
- determining a spatial relationship (α) between the second wind turbine (2B) and the first wind turbine (2A);
- obtaining a first wind direction reading (2A_{wd}) indicative of the wind direction (Dₜᵣᵤₑ) at the first wind turbine (2A);
- determining a pair-adjusted wind direction (2A2B_{wd}) for the second wind turbine (2B) on the basis of the first wind direction reading (2A_{wd}) and the spatial relationship (α); and
- deducing the existence of a wake-induced wind direction error at the second wind turbine (2B) on the basis of the pair-adjusted wind direction (2A2B_{wd}).

2. A method according to the preceding claim, comprising a step of determining the magnitude of a wake-induced wind direction error (2B_{wd_err}) on the basis of the pair-adjusted wind direction (2A2B_{wd}) and a wind speed value (2A_{ws}) indicative of the wind speed at the first wind turbine (2A).

3. A method according to according to the preceding claim, comprising subsequent steps of
- obtaining a second wind direction reading (2B_{wd}) indicative of a wind direction at the second wind turbine (2B); and
- correcting the second wind direction reading (2B_{wd}) on the basis of the wind direction error (2B_{wd_err}).

4. A method according to any of the preceding claims, comprising a preparatory phase in which a relationship (M, M_{swirl}) between values of wind direction error, pair-adjusted wind direction, and wind speed is established for that wind turbine pair (2A, 2B).

5. A method according to the preceding claim, wherein the relationship (M, M_{swirl}) is established in an iterative process, wherein each iteration comprises steps of
- obtaining a first wind direction reading (2A_{wd});
- obtaining a wind speed reading (2A_{ws}) indicative of the wind speed at the first wind turbine (2A);
- computing the pair-adjusted wind direction (2A2B_{wd}) on the basis of the first wind direction reading (2A_{wd}) and the spatial relationship (α);
- obtaining a wind direction reading (2B_{wd}) indicative of the wind direction at the second wind turbine (2B);
- computing the wind direction error (ε) from the wind direction readings (2A_{wd}, 2B_{wd}) for that combination of wind speed and pair-adjusted wind direction; and
- using the wind direction error (ε) to adjust a mean wind direction error (2B_{wd_err}).

6. A method according to the preceding claim, wherein values of mean wind direction error (2B_{wd_err}) are computed for bins of wind speed and pair-adjusted wind direction.

7. A method according to any of claims 4 to 6, wherein the preparatory phase (Pₚᵣₑₚ) persists until a convergence criterion is fulfilled.

8. A method according to any of claims 4 to 7, comprising a step of storing the relationship (M, M_{swirl}) between wind direction error, wind speed and relative wind direction for a wind turbine pair (2A, 2B) in the form of an array (11) in a memory of a control arrangement(1).

9. A control arrangement (1) of a wind park (2WP), adapted to
- obtain a spatial relationship (α) between a first wind turbine (2A) and a second wind turbine (2B);
- obtain a wind direction reading (2A_{wd}) from the first wind turbine (2A);
- determine the pair-adjusted wind direction (2A2B_{wd}) for that second wind turbine (2B) on the basis of the wind direction reading (2A_{wd}) and the spatial relationship (α); and
- deduce a wake-induced wind direction error at that second wind turbine (2B) on the basis of the pair-adjusted wind direction (2A2B_{wd}).

10. A wind park (2WP) comprising a plurality of wind turbines (2), and wherein the wind park (2WP) is operated using the method according to any of claims 1 to 8.

11. A wind park according to the preceding claim, comprising a means of identifying one or more wind turbine pairs in the wind park (2WP) on the basis of the wind park layout and the free-stream wind direction (Dₜᵣᵤₑ), wherein each wind turbine pair comprises an upstream wind turbine (2A) and a downstream wind turbine (2B).

12. A wind park according to claim 10 or claim 11, wherein a control arrangement (1) of the wind park (2WP) is provided with a memory (11) in which is stored a relationship (M, M_{swirl}) between wind direction error, wind speed and pair-adjusted wind direction for a each wind turbine pair comprising a downstream wind turbine (2B) and an upstream wind turbine (2A).

13. A wind park according to the preceding claim, wherein the memory is in the form of an array, preferably in the form of a look-up table (11), relating each of a number of combinations of wind speed and pair-adjusted wind direction to a corresponding value of wind direction error.

14. A wind park according to claim 12 or claim 13, wherein only a subset (M_{swirl}) of the relationship (M), for which the wind direction error exceeds a predetermined threshold, is stored in the memory (11).

15. A computer program product comprising a computer program that is directly loadable into a memory of a control arrangement (1) of a wind park (2WP) and which comprises program elements for performing steps of the method according to any of claims 1 to 8 when the computer program is executed by the control arrangement (1).
